# EUROPÄISCHE PATENTANMELDUNG

(11) **EP 3 579 072 A1**
(43) Veröffentlichungstag der Anmeldung: **11.12.2019**
(21) Anmeldenummer: 18176305.3
(22) Anmeldetag: 06.06.2018
(51) Int. Cl.: G05B 23/02, G06N 5/02

(54) **VERFAHREN ZUR AUTOMATISCHEN ERZEUGUNG GELABELTER SIGNATUREN**

(71) Anmelder: Siemens Aktiengesellschaft, 80333 München (DE)
(72) Erfinder: Klos, Hans-Henning, 91249 Weigendorf (DE); Manciu, Sofia, 33758 Schloss Holte-Stukenbrock (DE); Peschke, Jörn, 90489 Nürnberg (DE); Tolksdorf, Schirin, 90461 Nürnberg (DE)

(57) **Zusammenfassung**

Die Erfindung ist ein Verfahren zur automatischen Erzeugung gelabelter Signaturen (30),
wobei zunächst eine Quantisierung einer mit Bezug auf eine Anlage (12) aufgenommenen Zustandszeitreihe (16) angepasst wird, so dass alle von der Zustandszeitreihe (16) umfassten Zustände zumindest eine Zustandsdauer oberhalb einer Minimalzeit haben,
wobei danach aufgrund von Zustandswechseln in zumindest einer Zustandszeitreihe (16) Anlagenzustände (32) ermittelt werden,
wobei als Signaturen (30) die zwischen den Orten zweier aufeinanderfolgender Anlagezustände (32) liegenden Abschnitte einer mit Bezug auf die Anlage (12) aufgenommenen, synchronen Datenzeitreihe (14) ermittelt werden und diese mit einem Bezeichner (34) versehen werden, welcher zumindest einen die Signatur (30) bestimmenden Anlagenzustand (32) umfasst.

## Beschreibung

Die Erfindung bezieht sich auf ein Verfahren zum Labeln (mit einem Bezeichner versehen) von Signaturen. Sie bezieht sich weiter auf eine Vorrichtung zur Durchführung des Verfahrens. Eine Signatur ist ein Abschnitt in einer Signalfolge. Eine Signalfolge ergibt sich zum Beispiel als sogenannte Zeitreihe in Form von zeitlich aufeinanderfolgenden Werten, insbesondere Messwerten, aus einem technischen Prozess oder zeitlich aufeinanderfolgenden Steuersignalen für einen technischen Prozess.

Eine Auswertung einer solchen Signalfolge oder solcher Signalfolgen erfolgt oftmals mittels Machine Learning Verfahren. Für Analysen oder grafische Darstellungen von Trainingsdaten für Machine Learning Verfahren oder zur Erzeugung solcher Trainingsdaten ist es häufig notwendig, Daten, insbesondere Daten in Form von Zeitreihen, zu labeln, also einen bestimmten Zeitabschnitt eines Signalverlaufs mit einer Information zur Identifikation oder einer Information zur Bedeutung zu versehen. Eine solche Information kann zum Beispiel die Aussage umfassen, dass der Abschnitt des Signals vom Zeitpunkt t1 bis zum Zeitpunkt t2 den Prozess X darstellt oder aufgrund des Prozesses X resultiert.

Speziell für eine Umsetzung einer Erkennung von Mustern in einzelnen Abschnitten(Signatur) eines zeitlichen Signalverlaufs mittels Machine Learning Verfahren ist regelmäßig eine ausreichend große Anzahl von gelabelten Trainingsdaten erforderlich.

Während die Erfassung von Signalen und gegebenenfalls auch eine Vorverarbeitung, zum Beispiel eine Vorverarbeitung in Form einer Normalisierung, häufig automatisiert werden kann, ist das Labeln heute ein manueller Prozess. Dazu müssen von Personen mit Anlagenwissen und/oder Prozesswissen Kontextinformationen eingebracht werden, welche beim manuellen Labein verwendet werden. Je nach Anzahl der unterschiedlichen Signaturen und erforderlichen Trainingsdaten kann dies einen sehr hohen Aufwand bedeuten, welcher den Einsatz von Verfahren, die auf gelabelten Daten als Input basieren(zum Beispiel Machine Learning Verfahren oder statistische Auswerteverfahren), einschränkt oder ganz verhindert.

Ein Verfahren zur Automatisierung des Prozesses des Labelns von Zeitreihen könnte den Aufwand deutlich senken und ist potentiell auch für weitere Aufgabenstellungen, wie zum Beispiel die Erzeugung von Ansichten auf sogenannten Dashboards, von Vorteil.

Bei bekannten Verfahren, welche das Labeln von Daten unterstützen, werden die erfassten Signale lediglich so aufbereitet, dass der Prozess der Zuordnung vereinfacht wird. Das eigentliche Labeln muss immer noch manuell vom Anwender ausgeführt werden.

Bei Systemen, welche synthetische Testdaten auf Basis bereits gelabelter realer Daten erzeugen, erfolgt ebenfalls keine vollständig automatische Zuordnung, sondern nur eine Ableitung neuer Datensätze aus bereits vorher manuell gelabelten Daten.

Eine Aufgabe der Erfindung besteht entsprechend darin, ein Verfahren anzugeben, welches eine automatische Erzeugung gelabelter Signaturen in zeitlichen Signalverläufen - im Folgenden kurz als Zeitreihen bezeichnet - oder ein automatisches Labeln von Signaturen ermöglicht.

Diese Aufgabe wird erfindungsgemäß mittels eines Verfahrens zum automatischen Erzeugen gelabelter Signaturen (oder zum automatischen Labeln von Signaturen) mit den Merkmalen des Anspruchs 1 gelöst. Eine gelabelte Signatur ist eine mit einem Bezeichner versehene Signatur. Das der Signatur zugeordnete Label (der Bezeichner) beschreibt die Signatur.

Im Rahmen des Verfahrens ist Folgendes vorgesehen:
Es werden in Bezug auf eine technische Anlage oder einen technischen Prozess Daten verarbeitet, welche während eines vorgegebenen oder vorgebbaren Aufnahmezeitraums aufgenommen werden oder wurden. Die Daten werden zeitlich nacheinander aufgenommen, so dass bei der Aufnahme der Daten eine zeitliche Abfolge der Daten resultiert. Die Aufnahme der Daten kann optional in regelmäßigen zeitlichen Abständen erfolgen, insbesondere zu äquidistanten Zeitpunkten. Die Daten können, insbesondere bei einer Aufnahme zu nicht äquidistanten Zeitpunkten, mit einem den Aufnahmezeitpunkt kodierenden Zeitstempel versehen sein. Bei den vorgenannten, in Bezug auf die Anlage oder den Prozess aufgenommenen Daten, handelt es sich insbesondere um solche Daten, welche in der Anlage bzw. dem Prozess aufgenommen werden und/oder in einer zur Steuerung und/oder Überwachung der Anlage bzw. des Prozesses bestimmten Automatisierungshardware aufgenommen werden.

Die aufgenommenen Daten umfassen einerseits Daten, die zum Beispiel mittels einer Sensorik an oder in der jeweiligen Anlage oder dem jeweiligen Prozess aufnehmbar sind und mittels einer Sensorik aufgenommen wurden und die in zumindest einer Datenzeitreihe zusammengefasst sind, sowie andererseits Zustandswerte zumindest eines anlagenbezogenen Zustands, welche in zumindest einer Zustandszeitreihe zusammengefasst sind. Bei den aufgenommenen Daten kann es sich auch um in Bezug auf die jeweilige Anlage bzw. den jeweiligen Prozess berechnete Daten handeln, insbesondere Daten, welche mittels einer Simulation der Anlage oder eines Anlagenteils bzw. des Prozesses oder eines Prozessabschnitts erzeugt wurden. Die aufgenommenen Daten sind in zumindest einer Datenzeitreihe zusammengefasst. Bei den Zustandswerten kann es sich um an eine Anlage oder einen Prozess ausgegebene digitale oder analoge Steuersignale handeln. Genauso kann es sich bei den Zustandswerten um ebenfalls mittels einer Sensorik aufnehmbare Daten, berechnete Daten oder mittels einer Simulation erzeugte Daten handeln. Die Zustandswerte sind ebenfalls in zumindest einer Zustandszeitreihe zusammengefasst. Eine Unterscheidung in zumindest eine Datenzeitreihe einerseits sowie zumindest eine Zustandszeitreihe andererseits wird vor allem im Hinblick auf eine bessere Lesbarkeit der nachfolgenden Beschreibung vorgenommen.

In einem ersten Schritt des Verfahrens wird eine Quantisierung der oder jeder Zustandszeitreihe angepasst. Dafür wird während eines vorgegebenen oder vorgebbaren Abschnitts der oder einer Zustandszeitreihe ein Abstand zwischen zwei aufeinanderfolgenden Zustandswechseln ermittelt. Dieser Abstand wird mit einer vorgegebenen oder vorgebbaren Minimalzeit verglichen. Wenn der ermittelte Abstand kleiner als die Minimalzeit ist, wird die Quantisierung der Zustandszeitreihe angepasst. Bei mehreren Zustandszeitreihen wird bei einem Zustandswechsel in einer Zustandszeitreihe nur die Quantisierung der derjenigen Zustandszeitreihe mit dem Zustandswechsel angepasst. Ein Vergleich des Abstands zwischen zwei Zustandswechseln mit der Minimalzeit ist möglich, wenn die von der betrachteten Zustandszeitreihe umfassten Zustandswerte während des Aufnahmezeitraums in regelmäßiger Abfolge, zum Beispiel jede Sekunde, aufgenommen werden und damit ein Abstand zwischen zwei beliebigen Zustandswerten derselben Zustandszeitreihe unmittelbar einem Zeitwert entspricht. Ansonsten ist ein Vergleich des Abstands zwischen zwei Zustandswechseln mit der Minimalzeit zum Beispiel dann möglich, wenn die einzelnen Daten mit einer Zeitinformation, zum Beispiel einem Zeitstempel, versehen sind.

In einem zweiten Schritt des Verfahrens werden aus der oder jeder Zustandszeitreihe Anlagenzustände ermittelt. Ein Anlagenzustand ist grundsätzlich eine Kombination mehrerer zu ein und demselben Zeitpunkt gehöriger Zustandswerte. Die im Rahmen des Verfahrens erfassten Anlagenzustände sind solche Anlagenzustände, die aufgrund eines Zustandswechsels in der oder zumindest einer Zustandszeitreihe resultieren. Die im zweiten Schritt aus der oder jeder Zustandszeitreihe ermittelten Anlagenzustände umfassen entsprechend die Zustandswerte aller Zustandszeitreihen am Ort eines Zustandswechsels in zumindest einer Zustandszeitreihe.

In einem dritten Schritt des Verfahrens werden als Signaturen die zwischen den Orten/Positionen zweier aufeinanderfolgender Anlagezustände - nämlich der im zweiten Schritt ermittelten und aufgrund zumindest eines Zustandswechsels resultierenden Anlagenzustände - liegenden Abschnitte der oder jeder Datenzeitreihe ermittelt. Eine Signatur ist damit gewissermaßen ein entsprechender Abschnitt (Ausschnitt aus) der oder jeder Datenzeitreihe. Bei genau einer Datenzeitreihe ergibt sich zwischen zwei aufeinanderfolgenden Zustandswechseln genau ein solcher Abschnitt. Bei mehreren Datenzeitreihen ergibt sich eine entsprechende Mehrzahl von jeweils synchronen Abschnitten bzw. Ausschnitten.

Jeder Signatur wird als Label ein Bezeichner zugeordnet, zum Beispiel indem ein die Signatur und den Bezeichner umfassender Datensatz gebildet wird, wobei der Bezeichner zumindest einen die Signatur bestimmenden Anlagenzustand umfasst. Ein die Signatur bestimmender Anlagenzustand ist zum Beispiel ein Anlagenzustand, welcher den Beginn oder das Ende der Signatur bestimmt. Durch die Zuordnung, also zum Beispiel ein Zusammenfassen in einer Datenstruktur, eine Referenzierung oder dergleichen, wird die Signatur mit dem Bezeichner versehen. Indem der Bezeichner eine Kodierung eines Anlagenzustands umfasst, ist ein automatisches Labeln der Signaturen erreicht. Der Bezeichner (das jeweilige Label) kann zumindest automatisch interpretiert werden und umfasst beispielsweise in kodierter Form Informationen wie "Werkzeug = Bohrer 12mm", "Maschinenachse X vor", "Maschinenachse Y Stillstand".

Der Vorteil der Erfindung besteht unter anderem darin, dass nunmehr die Möglichkeit besteht, Signaturen in Zeitreihen, die in Anlagen oder mit Bezug zu einzelnen Maschinen erfasst werden - zum Beispiel Verläufe des elektrischen Stroms -, in Relation zu Anlagen- bzw. Maschinenzuständen zu setzen. Damit können automatisiert gelabelte Signaturen erzeugt werden, die zum Beispiel als Trainingsdaten für Machine Learning Verfahren zur Mustererkennung genutzt werden können. Das manuell sehr aufwendige Zuordnen von Zuständen und von Signaturen kann jetzt automatisch ausgeführt werden. Damit ist die Möglichkeit gegeben, den Aufwand für das Labeln einer gegebenen Anzahl von Signaturen deutlich zu senken und/oder eine wesentlich größere Anzahl von gelabelten Trainingsdaten zu erzeugen.

Im Gegensatz zu anderen Analyseverfahren, die zum Beispiel Ähnlichkeiten oder Wiederholungen von Verläufen in den Signaturen nutzen, sind diese Ähnlichkeiten hier kein Kriterium, sodass die Signaturen (auch bei größeren Abweichungen untereinander) den entsprechenden Zuständen zugeordnet werden können. Dies erhöht die Qualität von resultierenden Trainingsdaten und ermöglicht eine gute Einschätzung, inwieweit sich bestimmte Signaturen für maschinelle Lernverfahren eignen.

Bei dem hier vorgeschlagenen Ansatz ist es nicht notwendig, dass die Signaturen, nämlich die mit Bezug zu einem bestimmten technischen Prozess aufgenommenen Daten, mit dem jeweiligen Prozess korreliert sind. Im Gegenteil ist es möglich, auf Basis der ermittelten gelabelten Signaturen zu bewerten, inwieweit eine Korrelation vorliegt.

Der hier vorgeschlagene Ansatz ist besonders gut geeignet für analoge Parameter des jeweiligen technischen Prozesses, die einen großen Wertebereich aufweisen. Der Anwender muss als Vorgabe nur eine Aussage bezüglich der zeitlichen Dauer der interessierenden Prozesse machen (Aufnahmezeitraum). Auf dessen Basis erfolgt dann eine automatische Auswahl einer geeigneten Auflösung der oder jeder betrachteten Zustandszeitreihe.

Die oben genannte Aufgabe wird auch mittels einer Vorrichtung gelöst, welche zur Ausführung des Verfahrens wie hier und im Folgenden beschrieben bestimmt und eingerichtet ist und dazu Mittel zur Durchführung des Verfahrens umfasst. Das Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Vorrichtung, zum Beispiel eine Steuerungseinrichtung, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen und entsprechend bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch oder zumindest teilweise in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Firm- und Software oder in Firm- und Hardware, umfasst sind.

Für die weitere Beschreibung gilt zur Vermeidung unnötiger Wiederholungen, dass Merkmale und Details, die im Zusammenhang mit dem gegenständlichen Verfahren zum automatischen Erzeugen gelabelter Signaturen - Verfahren zum automatischen Labeln von Signaturen - sowie eventueller Ausgestaltungen beschrieben sind, selbstverständlich auch im Zusammenhang mit und im Hinblick auf eine zur Durchführung des Verfahrens eingerichtete Vorrichtung gelten. Folglich gelten Merkmale und Details, die im Zusammenhang mit dem gegenständlichen Verfahren und eventueller Ausgestaltungen beschrieben sind, zumindest auch für eine korrespondierende Vorrichtung, nämlich indem die Vorrichtung Mittel umfasst, welche zur Ausführung sämtlicher Verfahrensschritte bestimmt und eingerichtet sind.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens/der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens wird zur Anpassung der Quantisierung der oder jeder Zustandszeitreihe eine Schrittweite, mit welcher ein Zustand in einer jeweiligen Zustandszeitreihe abgebildet wird, angepasst, insbesondere vergrößert. Dies ist eine einfache und unkomplizierte Möglichkeit zur Anpassung der Quantisierung.

Bei einer weiteren Ausführungsform des Verfahrens wird in dessen drittem Schritt eine Länge jeder ermittelten Signatur mit einer vorgegebenen oder vorgebbaren Maximallänge verglichen und Signaturen mit einer die Maximallänge überschreitenden Länge werden ausgeschieden. Durch die Vorgabe der Maximallänge legt der Anwender fest, welche Signaturen wichtig oder potentiell interessant sind. Auf diese Weise werden nicht ausreichend charakteristische Signaturen ausgeschieden.

Optional, insbesondere zusätzlich oder alternativ zu einem Ausscheiden von Signaturen, deren Länge die Maximallänge überschreitet, kann eine längen-/dauerbezogene Reduktion der Datenmenge auch bereits vor der Quantisierung, also vor dem oben beschriebenen ersten Schritt, erfolgen. Dann wird die oder jede Zustandszeitreihe betrachtet und es werden die Abstände zwischen aufeinanderfolgenden Zustandswechseln ermittelt. Für alle ermittelten Zustandswechsel wird eine Dauer eines durch zwei aufeinanderfolgende Zustandswechsel bestimmten Abschnitts der Zustandszeitreihe mit einer vorgegebenen oder vorgebbaren Maximaldauer verglichen. Abschnitte mit einer die Maximaldauer überschreitenden Dauer werden sodann aus der Zustandszeitreihe ausgeschieden. Ein großer Abstand zwischen aufeinanderfolgenden Zustandswechseln kann sich zum Beispiel ergeben, wenn die Anlage über Nacht oder während vergleichbarer Zeiträume nicht oder nur teilweise in Betrieb ist und sich zum Beispiel in einem "Standby-Modus" befindet. Bei einem derartigen Ausscheiden eines Abschnitts aus einer Zustandszeitreihe wird auch der synchrone Abschnitt der oder jeder Datenzeitreihe sowie bei mehreren Zustandszeitreihen der synchrone Abschnitt der oder jeder weiteren Zustandszeitreihe ausgeschieden.

Bei einer nochmals weiteren Ausführungsform des Verfahrens wird, insbesondere im Anschluss an die Quantisierung im ersten Schritt, eine Zustandszeitreihe, welche nach der Quantisierung während des Aufnahmezeitraums keinen Zustandswechsel (mehr) umfasst, ausgeschieden. Aufgrund des fehlenden Zustandswechsels ist der jeweilige Zustand nicht bestimmend für die ermittelten Signaturen, zum Beispiel weil der Zustand beschreibt, dass die Anlage oder ein Anlagenteil eingeschaltet ist und sich dieser Zustand während des Aufnahmezeitraums nicht ändert oder weil der Zustand beschreibt, dass ein Heizelement aktiviert ist und sich dieser Zustand während des Aufnahmezeitraums nicht ändert. Eine Aufnahme eines momentanen Zustandswerts eines solchen Zustands in einen als Label einer Signatur fungierenden Bezeichner führt zu keinem Informationsgewinn. Das Ausscheiden einer solchen Zustandszeitreihe führt vorteilhaft zu einer Reduktion der zu verarbeitenden Datenmenge.

Bei einer optionalen Ausführungsform des Verfahrens umfasst der als Label der Signatur fungierende Bezeichner einen Zeitstempel, nämlich einen Zeitstempel, welcher den Zeitpunkt des von dem Bezeichner umfassten Anlagenzustands darstellt oder kodiert. Indem der Bezeichner auch einen solchen Zeitstempel umfasst, umfasst dieser einen zusätzlichen Informationsanteil.

Bei einer weiteren Ausführungsform des Verfahrens werden die ermittelten und während des Aufnahmezeitraums erfassten Signaturen in Gruppen zusammengefasst, nämlich in Gruppen, bei denen jede einzelne Gruppe nur Signaturen mit gleichem Anlagenzustand umfasst. Jede Gruppe ist damit eindeutig mit einem jeweiligen Anlagenzustand verknüpft oder jedem Anlagenzustand sind eine Gruppe und die davon umfassten Signaturen zugeordnet. Die Signaturen können im Weiteren zum Beispiel zur Erkennung von Gemeinsamkeiten verarbeitet werden. Dies ermöglicht zum Beispiel bei einer zukünftigen Überwachung der Anlage und bei einem Auftreten einer Abfolge von Daten, welche einer Signatur oder als charakteristisch ermittelten Teilen einer Signatur entspricht, die automatische Erkennung eines jeweiligen Anlagenzustands.

Für eine solche Verarbeitung werden die von einer Gruppe umfassten Signaturen beispielsweise einer zur Ausführung eines Verfahrens zum maschinellen Lernen bestimmten Vorrichtung übermittelt.

Alternativ oder zusätzlich können die von einer Gruppe umfassten Signaturen auch einer Vorrichtung übermittelt werden, welche zur Erstellung einer visuellen Darstellung der Signaturen oder zur Ausführung eines Verfahrens zur statistischen Auswertung der Signaturen bestimmt ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine mittels einer Steuerungseinrichtung überwachte technische Anlage und im Rahmen der Überwachung erhältliche und zu zumindest einer Datenzeitreihe sowie zumindest einer Zustandszeitreihe zusammengefasste Daten,
- FIG 2: zwei synchrone Zustandszeitreihen mit davon umfassten Zustandswerten,
- FIG 3: einen möglichen zeitlichen Verlauf von in einer Zustandszeitreihe zusammengefassten Zustandswerten sowie eine Quantisierung der Zustandswerte,
- FIG 4: zwei synchrone Zustandszeitreihen nach einer Quantisierung und eine dazu synchrone Datenzeitreihe mit aufgrund von Zustandswechseln in zumindest einer Zustandszeitreihe resultierenden Anlagenzuständen und Signaturen als Abschnitten der Datenzeitreihe zwischen zwei aufeinanderfolgenden Anlagenzuständen,
- FIG 5: Signaturen zusammen mit jeweils einem als Label einer Signatur fungierenden Bezeichner und
- FIG 6: Gruppen von zusammengehörigen Signaturen mit einer Vorrichtung zu deren Verarbeitung/Auswertung.

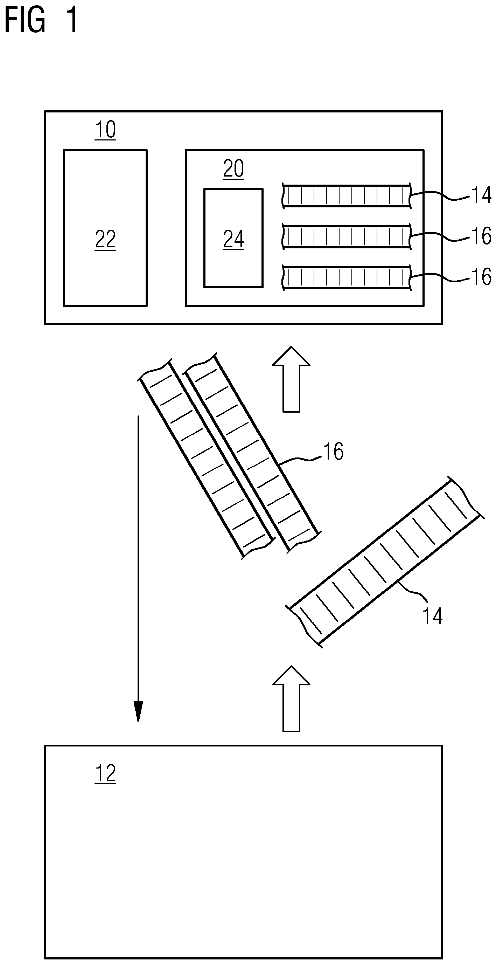

FIG 1 zeigt - in schematisch stark vereinfachter Art und Weise - eine Überwachungseinrichtung 10 und eine grundsätzlich beliebige technische Einrichtung 12. Bei der technischen Einrichtung 12 handelt es sich zum Beispiel um eine Anlage zur Automatisierung eines technischen Prozesses oder eines technischen Teilprozesses. Genauso kann es sich bei der technischen Einrichtung 12 um eine einzelne Maschine oder eine Gruppe von Maschinen, zum Beispiel eine Maschine oder eine Gruppe von Maschinen in einer Anlage zur Automatisierung eines Prozesses oder Teilprozesses handeln. Auf die Art der technischen Einrichtung 12 kommt es nicht an. Im Interesse einer besseren Lesbarkeit der weiteren Beschreibung wird im Folgenden zur Bezeichnung der technischen Einrichtung 12 von einer Anlage 12 gesprochen. Die vorgenannten Beispiele sind dabei jeweils mitzulesen.

Mittels der Überwachungseinrichtung 10 und einer der Überwachungseinrichtung 10 zugeordneten, an sich bekannten und hier nicht gezeigten, insbesondere im Bereich der Anlage 12 platzierten Sensorik wird die jeweilige Anlage 12 überwacht. Diese Überwachung ist in der Darstellung in FIG 1 mittels des von der Überwachungseinrichtung 10 zur Anlage 12 weisenden Pfeils veranschaulicht. Als Ergebnis der Überwachung der Anlage 12 ist zumindest eine Zeitreihe 14 mit mittels der Sensorik aufgenommenen Daten erhältlich. Eine Zeitreihe 14 umfasst in grundsätzlich an sich bekannter Art und Weise eine chronologisch geordnete Abfolge von bei der Anlage 12 oder in Bezug auf die Anlage 12 erfassten Daten. Die Erfassung der Daten kann zum Beispiel in regelmäßiger zeitlicher Abfolge, zum Beispiel jede Sekunde, erfolgen. Eine Zeitreihe 14 kann insoweit zum Beispiel Daten zum zeitlichen Verlauf einer Stromaufnahme der Anlage 12 oder in der Anlage 12 umfassen.

Als weiteres Ergebnis der vorgenannten Überwachung sind Daten bezüglich zumindest eines Zustands der Anlage 12 erhältlich. Ein Zustand ist zum Beispiel ein Datum, welches einen Aktivierungszustand (An, Aus etc.) der Anlage 12 oder eines Anlagenteils kodiert. Einem Zustand liegt ein Anlagenparameter zugrunde, zum Beispiel "Anlage an", "Anlagenteil 1 an", "Maschinenachse 1 aktiv", "Übertemperaturüberwachung ausgelöst", "Füllstandssoll erreicht", "Füllstandsmaximum erreicht", "Position Maschinenachse 1", "Füllstand Reaktor 1", "Temperatur Mischer 1" usw. Als Zustände kommen alternativ oder zusätzlich auch berechnete oder mittels einer Simulation erzeugte, insbesondere mittels eines sogenannten Zustandsautomaten (state machine) verarbeitete Zustände in Betracht, welche die jeweilige Anlage 12 oder einen Anlagenteil beschreiben. Auch die Erfassung von Zustandswerten erfolgt über einen längeren Zeitraum, nämlich über einen längeren Zeitraum parallel zu der Erfassung der mittels der Sensorik erfassbaren Daten.

Zur Unterscheidung werden die vorgenannte Zeitreihe 14 im Folgenden als Datenzeitreihe 14 und jede sich auf einen Zustand beziehende Zeitreihe als Zustandszeitreihe 16 bezeichnet. Die Datenzeitreihe 14 und/oder jede Zustandszeitreihe 16 kann bzw. können sich - anstelle einer Auswertung von Daten einer Sensorik -auch aufgrund einer Berechnung, insbesondere einer Berechnung in Form einer Simulation, ergeben.

Die zumindest eine Datenzeitreihe 14 und die Zustandszeitreihen 16 gelangen im Rahmen der Überwachung der Anlage 12 zur Überwachungseinrichtung 10 und werden in einem Speicher 20 gespeichert. Alternativ entstehen die zumindest eine Datenzeitreihe 14 und die Zustandszeitreihen 16 in diesem Speicher 20, indem sukzessiv einzelne, die Datenzeitreihe 14 und die Zustandszeitreihen 16 bildende Daten zur Überwachungseinrichtung 10 gelangen. Dies ist in der Darstellung in FIG 1 mittels der von der Anlage 12 zur Überwachungseinrichtung 10 weisenden Blockpfeile veranschaulicht.

Der Speicher 20 ist zum Beispiel ein von der Überwachungseinrichtung 10 umfasster Speicher 20, kann ebenso aber ein leitungslos oder leitungsgebunden für die Überwachungseinrichtung 10 erreichbarer, von der Überwachungseinrichtung 10 entfernter Speicher 20 sein. Die weitere Beschreibung wird auf Basis eines von der Überwachungseinrichtung 10 umfassten Speichers 20 fortgesetzt. Die Möglichkeit eines entfernten Speichers 20 ist jeweils mitzulesen.

Zur Auswertung der zumindest einen Datenzeitreihe 14 sowie der zumindest einen Zustandszeitreihe 16 umfasst die Überwachungseinrichtung 10 eine Verarbeitungseinheit 22 in Form von oder nach Art eines Mikroprozessors. Dieser führt beim Betrieb der Überwachungseinrichtung 10 ein in den Speicher 20 geladenes Computerprogramm 24 mit einer Implementation des hier vorgeschlagenen Ansatzes aus.

Die nachfolgende Beschreibung bezieht sich auf zumindest eine Datenzeitreihe 14 sowie zwei Zustandszeitreihen 16. Allgemein ist der hier vorgeschlagene Ansatz auf Daten in Form zumindest einer Datenzeitreihe 14 und zumindest einer Zustandszeitreihe 16 anwendbar. Entsprechend sind bei jeder Erwähnung einer Datenzeitreihe 14 auch mehrere Datenzeitreihen 14 mitzulesen und ebenso sind bei jeder Erwähnung von zwei Zustandszeitreihen 16 auch genau eine Zustandszeitreihe 16 und mehr als zwei Zustandszeitreihen 16 mitzulesen.

Die zumindest eine Datenzeitreihe 14 und die Zustandszeitreihen 16 werden während eines vorgegebenen oder vorgebbaren Aufnahmezeitraums aufgenommen.

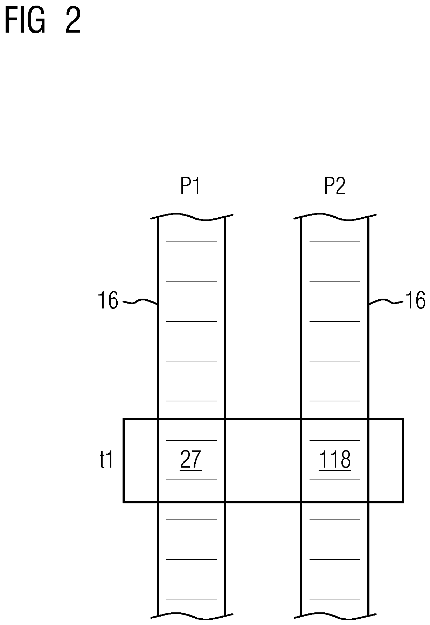

Die von den Zustandszeitreihen 16 umfassten Daten beschreiben unterschiedliche Zustände der Anlage 12. Dies ist in der Darstellung in FIG 2 veranschaulicht, indem dort für zwei synchrone Zustandszeitreihen 16 jeweils der davon umfasste und zum selben Zeitpunkt herrschende Zustandswert des jeweiligen Parameters gezeigt ist. Bei den in Form der Zustandszeitreihen 16 erfassten Zuständen handelt es sich zum Beispiel um eine zeitliche Abfolge von Momentanwerten einer Drehzahl einer Maschinenachse der Anlage 12 und eine zeitliche Abfolge von Momentanwerten einer Stromaufnahme der Maschinenachse.

Die Zustandszeitreihen 16 sind symbolisch mit P1 (erste Zustandszeitreihe 16) und P2 (zweite Zustandszeitreihe 16) bezeichnet. Der betrachtete Zeitpunkt ist symbolisch mit t1 bezeichnet. Der zum Zeitpunkt t1 bestehende Zustand der Anlage 12 kann gemäß dem dargestellten Beispiel als durch die Momentanwerte der betrachteten Zustände wie folgt beschrieben bezeichnet werden: P1(t1=27; P2(t1)=118. Dies ist eine Beschreibung eines Zustands der Anlage 12. Im Folgenden wird aber auch von einem Zustand eines Parameters gesprochen. Dies bezieht sich auf einen jeweiligen Wert des zur Beschreibung des Zustands betrachteten Parameters. Eine Zeitspanne, während derer sich der Zustand eines Parameters nicht ändert, ist die Dauer dieses Zustands des Parameters (Zustandsdauer).

Jede neue Zustandskombination definiert grundsätzlich einen neuen Zustand der Anlage 12. Bei Parametern, deren Zustandswerte sich sehr schnell ändern - also bei Parametern mit einer kurzen Zustandsdauer -, führt dies zu schnellen Zustandswechseln und zu einer großen Anzahl von Zustandswechseln. Realistisch lässt sich aber auch in automatisierter Form nur eine begrenzte Anzahl von Zuständen betrachten. Deshalb wird zunächst eine Quantisierung der Zustandszeitreihen 16 durchgeführt. Die Quantisierung soll die Anzahl der möglichen Zustände und damit die Anzahl von während eines Zeitabschnitts auftretenden Zustandswechseln reduzieren.

Die Quantisierung der Zustandszeitreihen 16 ist ein erster Schritt des hier vorgeschlagenen Ansatzes. Die Quantisierung wird im Folgenden mit weiteren Einzelheiten beschrieben.

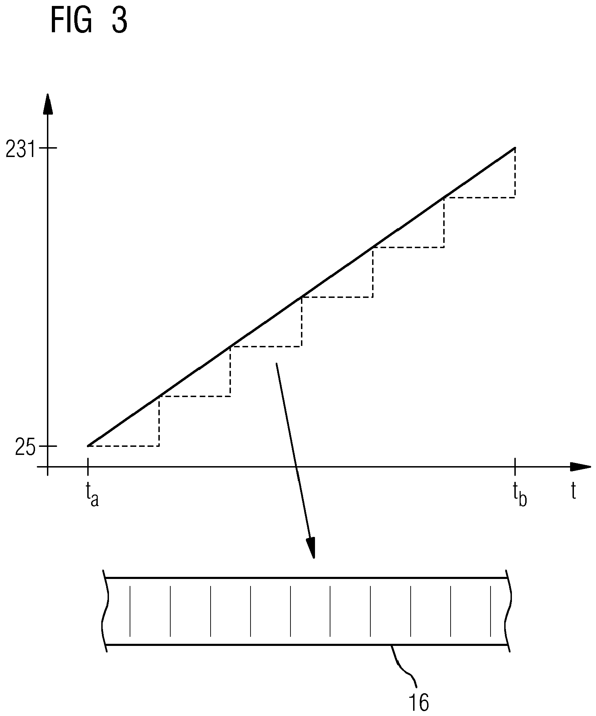

Dafür wird zunächst auf die Darstellung in FIG 3 verwiesen. Dort ist der zeitliche Verlauf der Zustandswerte eines Parameters über der Zeit t gezeigt. Ersichtlich handelt es sich um einen kontinuierlichen Werteverlauf. Lediglich beispielhaft wird davon ausgegangen, dass der Werteverlauf bei "25" als Startwert beginnt und schließlich einen Endwert "231" erreicht. Selbst wenn der kontinuierliche Werteverlauf in einer Zustandszeitreihe 16 nur in Form von aufeinanderfolgenden ganzen Zahlen ("25", "26", "27", .. "230", "231") dargestellt wird, hat zunächst jeder neue Zahlenwert als neuer Zustand zu gelten. Innerhalb der Zeitspanne tₐ .. t_{b} ergeben sich damit bei der gezeigten Situation dann insgesamt 207 Zustände. Eine geeignete Quantisierung reduziert diese Zahl. Dafür wird ggf. die Auflösung (Schrittweite), mit welcher der Zustand in einer jeweiligen Zustandszeitreihe 16 abgebildet wird, angepasst.

Bei einem in Form eines Analogwerts erfassten Zustand kann eine Vorschrift für eine Quantisierung, also eine Abbildung des Zustands in eine jeweilige Zustandszeitreihe 16, lauten, dass jeweils nur die ganzzahligen Werte übernommen werden. Dann ergibt sich eine Zustandszeitreihe 16 wie oben beschrieben. Bei einer Reduktion der Auflösung kann die Abbildungsvorschrift (Quantisierung) zum Beispiel mittels einer Ganzzahldivision (DIV) gebildet werden. Eine Abbildungsvorschrift wie zum Beispiel (k DIV 5) x 5, wobei k der jeweilige Zustandswert ist, liefert eine Zustandszeitreihe 16 mit Vielfachen von fünf, im vorliegenden Beispiel also eine Zustandszeitreihe 16 mit "25", "25", ... "25", "30", "30", ... "30", "35", ... "230". Dies führt zu einer Reduktion auf 41 verschiedene Zustände innerhalb der Zustandszeitreihe 16. Eine weitere Reduktion der Auflösung kann erreicht werden, wenn bei einer Abbildungsvorschrift wie zum Beispiel (k DIV q) x q die Schrittweite q weiter vergrößert wird, zum Beispiel auf den Wert "8". Dann ergeben sich noch 25 verschiedene Zustände innerhalb der Zustandszeitreihe 16. Eine weitere Erhöhung der Schrittweite, also des Werts q, reduziert die Anzahl der verschiedenen Zustände innerhalb der Zustandszeitreihe 16 noch weiter.

Grundsätzlich sind auch andere Abbildungsvorschriften (Quantisierungen) denkbar. Die hier zur Erläuterung verwendete Abbildungsvorschrift ist demgemäß ausdrücklich nur als Beispiel zu verstehen und die Erläuterung soll zeigen, dass mit einer Reduktion der Auflösung eine Reduktion der innerhalb einer Zustandszeitreihe 16 enthaltenen Zustände erreichbar ist. Die gestrichelte Linie in FIG 3 zeigt das Ergebnis einer reduzierten Auflösung bei einer Quantisierung des durch die durchgezogene Linie gezeigten Verlaufs der Zustandswerte. Die Quantisierung bildet die Basis für eine jeweilige Zustandszeitreihe 16.

Theoretisch kann bei einer beliebigen Erhöhung der Schrittweite und einer dann damit durchgeführten Quantisierung eine Zustandszeitreihe 16 erreicht werden, welche nur noch einen einzigen Zustand umfasst. Dies ist selbstverständlich nicht sinnvoll und bei der Quantisierung im Rahmen des hier vorgeschlagenen Ansatzes geht es darum, eine geeignete Quantisierung durchzuführen, also eine Quantisierung, welche die Anzahl der verschiedenen Zustände reduziert, aber wesentliche Zustände und wesentliche Zustandsänderungen erhält.

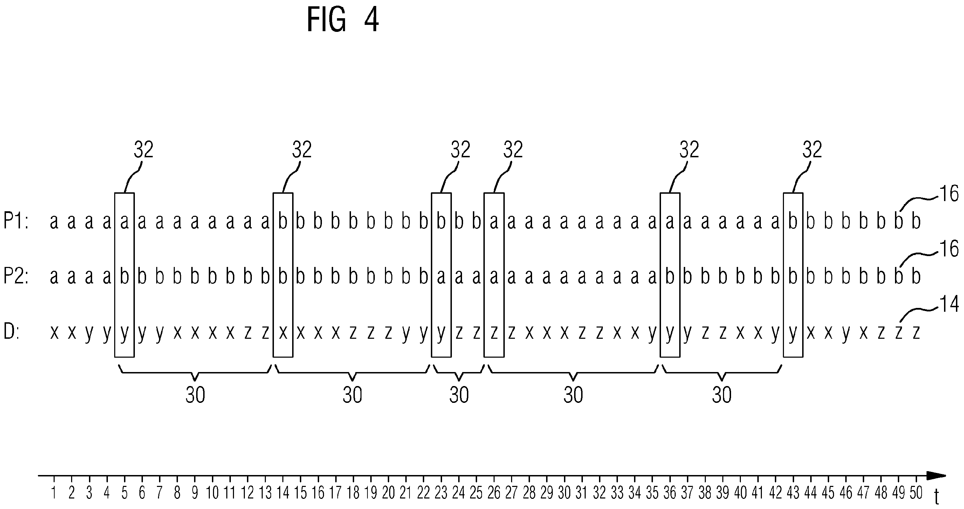

Dafür wird von zumindest zwei während eines vorgegebenen oder vorgebbaren Zeitraums aufgenommenen Zustandszeitreihen 16 ausgegangen. Bezüglich der anfänglichen Länge dieses Zeitraums kommt es im Wesentlichen darauf an, dass davon ausgegangen werden kann, dass eine ausreichende Anzahl typischer zu erkennender Signaturen 30 (FIG 4) während dieses Zeitraums in der betrachteten Datenzeitreihe 14 vorkommen. Bei jeder Änderung eines Zustands eines Parameters wird geprüft, wie lange der vorherige Zustand des jeweiligen Parameters bestanden hat und ob die Zustandsdauer kleiner als eine vorgegebene oder vorgebbare Minimalzeit war. Wenn die Zustandsdauer kleiner als die Minimalzeit war, wird eine Auflösung für diese Zustandszeitreihe 16 sowie alle anderen gleichzeitig betrachteten Zustandszeitreihen 16 reduziert, zum Beispiel durch eine Erhöhung der Schrittweite in einer entsprechenden Abbildungsvorschrift. Eine Erhöhung der Schrittweite kann linear erfolgen, zum Beispiel indem die Schrittweite gegenüber einer ursprünglichen Schrittweite verdoppelt wird. Ebenso kann die Schrittweite auch logarithmisch oder exponentiell erfolgen. Grundsätzlich kann die Anpassung der Schrittweite in einer beliebigen, in einer für eine automatische Ausführung darstellbaren Art und Weise erfolgen.

Eine Reihenfolge der Betrachtung der Zustandszeitreihen 16 kann grundsätzlich nach verschiedenen Kriterien gewählt werden (nach der Reihenfolge des Auftretens einer Zustandsänderung, zufällig usw.). Optional ist vorgesehen, zunächst diejenigen Zustände und die zugehörigen Zustandszeitreihen 16 zu betrachten und gegebenenfalls deren Auflösung zu reduzieren, die sich besonders schnell ändern.

Nach einer solchen angepassten Quantisierung der oder jeder Zustandszeitreihe 16 werden entweder neue Daten zum Erhalt neuer Zustandszeitreihen 16 aufgenommen oder die bereits aufgezeichneten Werte werden erneut analysiert. Dieser Vorgang wird so lange wiederholt, bis die Zustandsdauern aller Zustände in den betrachteten Zustandszeitreihen 16 oberhalb der Minimalzeit liegen. Falls sich bei der Anpassung der Quantisierung eine Zustandszeitreihe 16 ergibt, in der keine Zustandsänderung des jeweiligen Parameters mehr stattfindet, werden dieser Zustand und dessen Zustandszeitreihe 16 insgesamt nicht mehr betrachtet.

Am Ende dieses ersten Schritts sind Zustandszeitreihen 16 (zumindest eine) mit einer angepassten Quantisierung entstanden. Jede Zustandszeitreihe 16 umfasst eine zeitliche Abfolge von Zustandswerten bezüglich des jeweils betrachteten Zustands (Parameter). Jeder Zustandswert kodiert einen momentanen Zustand. In einer Zustandszeitreihe 16 aufeinanderfolgende gleiche Zustandswerte kodieren einen länger andauernden Zustand. Aufgrund der während des ersten Schritts erfolgten Anpassung der Quantisierung dauert jeder einzelne Zustand länger als die Minimalzeit.

Die Darstellung in FIG 4 zeigt exemplarisch ein Ergebnis einer Quantisierung. Gezeigt sind zwei symbolisch mit "P1" und "P2" bezeichnete Zustandszeitreihen 16, welche einzelne symbolisch mit "a" und "b" bezeichnete Zustände umfassen. Ein Zustandswechsel innerhalb einer Zustandszeitreihe 16 ergibt sich jeweils bei einem Übergang von einem Zustand "a" auf einen Zustand "b" oder bei einem Übergang von einem Zustand "b" auf einen Zustand "a". Betrachtet werden jeweils diejenigen Positionen, bei denen sich in einer der Zustandszeitreihen 16 ein Zustandswechsel ergibt. Die resultierenden Zustände Z1, Z2 usw. - im Folgenden als Zustände der betrachteten Anlage 12 oder kurz als Anlagenzustände 32 bezeichnet - sind wie folgt:
Z1: P1(5)=a; P2(5)=b
Z2: P1(14)=b; P2(14)=b
Z3: P1 (23)=b; P2 (23) =a
Z4: P1 (26)=a; P2 (26) =a
Z5: P1 (36)=a; P2 (36) =b
Z6: P1 (43)=b; P2 (43) =b

Die symbolisch mit "D" bezeichnete, zu den Zustandszeitreihen 16 synchrone Datenzeitreihe 14 umfasst einzelne symbolisch mit "x", "y" und "z" bezeichnete Daten. Anstelle der hier gezeigten einen Datenreihe 14 ist eine Betrachtung einer grundsätzlich beliebigen Vielzahl von synchronen Datenreihen 14 möglich. Grundsätzlich ist jeder Abschnitt der oder jeder Datenreihe 14 eine Signatur. Eine Signatur 30 umfasst also bei genau einer betrachteten Datenzeitreihe 14 einen Abschnitt dieser Datenzeitreihe 14. Bei mehreren betrachteten Datenzeitreihen 14 umfasst die Signatur 30 alle synchronen Abschnitte aller betrachteten Datenzeitreihen 14. Optional gehört/gehören auch ein synchroner Abschnitt zumindest einer Zustandszeitreihe 16 bzw. die synchronen Abschnitte mehrerer Zustandszeitreihen 16 zur Signatur 30.

Nach dem hier vorgeschlagenen Ansatz werden die Signaturen 30 zwischen den im Anschluss an die Anpassung der Quantisierung resultierenden Anlagenzuständen 32 betrachtet, wobei eine Signatur 30 den initialen Anlagenzustand 32 und/oder den finalen Anlagenzustand 32 umfassen kann (bei der Darstellung in FIG 4 umfassen die Signaturen 30 jeweils den initialen Anlagenzustand 32). Die erste Signatur 30 aus der Darstellung in FIG 4 lautet "yyyxxxxzz".

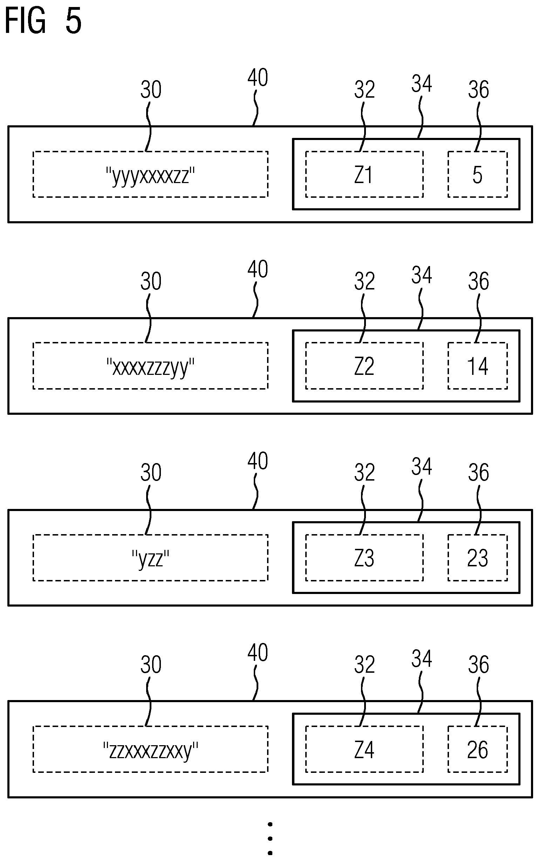

Jede Signatur 30 wird mit einem Bezeichner 34 (FIG 5) versehen ("gelabelt"), welcher zumindest den jeweils zugehörigen Anlagenzustand 32 umfasst.

Daraus ergeben sich folgende gelabelte und symbolisch mit S1, S2 usw. bezeichnete Signaturen 30:
S1 : { "yyyxxxxzz", Z1} = { "yyyxxxxzz", P1(5)=a; P2(5)=b },
S2: { "xxxxzzzyy", Z2 },
S3: { "yzz", Z3 },
S4: { "zzxxxzzxxy", Z4 },
S5: { "yyzzxxy", Z5 }

Dieses Labeln, also das Kombinieren einer Signatur 30 mit einem zumindest den jeweiligen Anlagenzustand 32 umfassenden Bezeichner 34, ist der zweite Schritt in dem hier vorgeschlagenen Ansatz.

Optional umfasst jeder Bezeichner 34 noch zusätzlich einen Zeitstempel 36, welcher den Zeitpunkt des Beginns der Signatur 30 kodiert, so dass sich auf Basis der Situation gemäß FIG 4 Signaturen 30 ergeben wie folgt und wie dies auch in FIG 5 gezeigt ist, wobei jeder jeweils einer Signatur 30 zugeordnete Bezeichner 34 zumindest den jeweiligen Anlagenzustand 32 und einen Zeitstempel 36 umfasst.
S1: { "yyyxxxxzz", t=5, Z1},
S2: { "xxxxzzzyy", t=14, Z2 },
S3: { "yzz", t=23, Z3 },
S4: { "zzxxxzzxxy", t= 26, Z4 },
S5: { "yyzzxxy", t=43, Z5 }

Jede Signatur 30 wird zusammen mit ihrem Bezeichner 34 in einem Datensatz 40 zusammengefasst und es ergibt sich eine der Anzahl der Signaturen 30 entsprechende Anzahl von Datensätzen 40. Im vorliegenden, die tatsächlichen Verhältnisse im Interesse einer besseren Lesbarkeit der hier vorgelegten Beschreibung extrem stark vereinfachenden Beispiel ergeben sich fünf Datensätze 40. Bei einer konkreten Anwendung des hier vorgeschlagenen Ansatzes ist von vielen Hundert Datensätzen 40 und mehr sowie davon jeweils umfassten gelabelten Signaturen 30 auszugehen.

Optional ist vorgesehen, dass Signaturen 30 mit einer Länge (also einer Anzahl davon umfasster, aufeinander folgender Daten) oberhalb einer vorgegebenen oder vorgebbaren Maximallänge verworfen (ausgeschieden) werden. Dieses Verwerfen erfolgt beispielsweise, indem für solche Signaturen 30 kein Datensatz 40 angelegt wird.

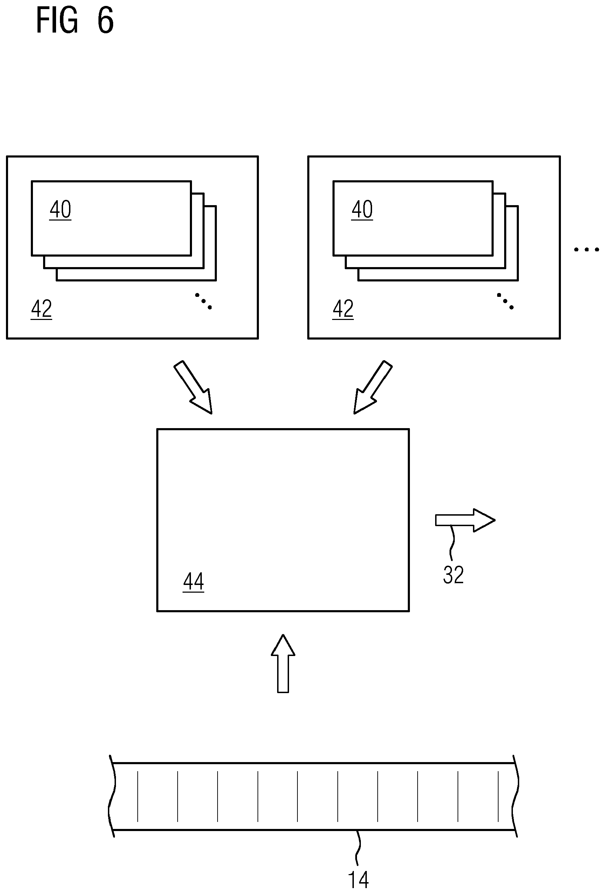

In einem abschließenden dritten Schritt werden nun die Datensätze 40 gruppiert. Das Kriterium für die Gruppierung ist dabei der jeweilige von den Datensätzen 40 umfasste Anlagenzustand. Bei der beispielhaft in FIG 4 gezeigten Situation ergeben sich zu den Zeitpunkten t=5 und t=36 dieselben Anlagenzustände, nämlich Z1: P1=a; P2=b bzw. Z5: P1=a; P2=b. Datensätze 40 mit gleichen Anlagenzuständen 32 werden zu einer Gruppe 42 zusammengefasst, wie dies schematisch vereinfacht in FIG 6 gezeigt ist.

Jede Gruppe 42 stellt damit eine Zuordnung von Signaturen 30 zu Anlagenzuständen 32 dar. Alle Datensätze 40 einer Gruppe 42 - also Datensätze 40 mit jeweils übereinstimmenden Anlagenzuständen 32 - können jetzt als Trainingsdaten einer zum Ausführen eines Verfahrens zum maschinellen Lernen (Machine Learning) bestimmten Vorrichtung 44 übermittelt werden. Grundsätzlich besteht hier auch die Möglichkeit, jeweils nur die von den einzelnen Datensätzen 40 umfassten Signaturen 30 zu übermitteln, denn diese werden im Rahmen des maschinellen Lernens berücksichtigt.

Nach einer Verarbeitung solcher Trainingsdaten kann der Vorrichtung 44 zum Beispiel eine während eines aktuellen Betriebs der jeweiligen Anlage 12 aufgenommene Datenzeitreihe 14 oder eine Mehrzahl solcher synchroner Datenzeitreihen 14 übermittelt werden. Die Vorrichtung 44 ermittelt dann anhand der von der oder jeder verarbeiteten Datenzeitreihe 14 umfassten Daten den Anlagenzustand 32 oder eine Abfolge von Anlagenzuständen 32, welcher bzw. welche angesichts der zuvor verarbeiteten Trainingsdaten mit hinreichender Zuverlässigkeit den jeweiligen Daten zugrunde gelegen hat bzw. haben.

Verfahren zum maschinellen Lernen sind grundsätzlich an sich bekannt und nicht Gegenstand der hier vorgeschlagenen Neuerung. Zur Auswertung der Datensätze 40 kommen grundsätzlich beliebige Verfahren zum maschinellen Lernen in Betracht. Bei einer Vorrichtung 44, welche ein Verfahren zum maschinellen Lernen ausführt, handelt es sich in grundsätzlich an sich bekannter Art und Weise um einen Computer oder ein Computersystem, wobei die von einem entsprechenden Computersystem umfassten Geräte und Einrichtungen auch in der sogenannten Cloud verfügbar gemacht sein können. Genauso kann es sich bei der Vorrichtung 44 um die Überwachungseinrichtung 10 aus FIG 1 handeln. Die Vorrichtung 44 ist, insbesondere mittels einer entsprechenden Software, dafür bestimmt und eingerichtet, zumindest ein Verfahren zum maschinellen Lernen auf die Signaturen 30 zumindest einer Gruppe 42 anzuwenden.

Die Vorrichtung 44 ist - in einer optionalen alternativen Ausführungsform -eine Vorrichtung 44, welche zur Erstellung einer visuellen Darstellung der von einer Gruppe 42 umfassten Signaturen 30 oder bei mehreren Gruppen 42 der jeweils von einer Gruppe 42 umfassten Signaturen 30 bestimmt und eingerichtet ist. Die Darstellung erfolgt zum Beispiel in Form einer Webseite und dort in Form jeweils eines sogenannten Dashboards für jede Gruppe 42. Die Vorrichtung 44 ist dann ein Computer oder ein Computersystem der oben genannten Art, welche dafür bestimmt und eingerichtet ist, solche Darstellungen zu erzeugen, insbesondere mittels einer entsprechenden Software.

Das hier vorgeschlagene automatische Erzeugen gelabelter Signaturen 30, insbesondere das Erzeugen gelabelter Signaturen 30 nach einer vorherigen Anpassung einer Quantisierung der oder jeder Zustandszeitreihe 16, erfolgt entweder online (online-Verarbeitung), also parallel zur Erfassung der Zeitreihen 14, 16 (Datenzeitreihe(n) 14, Zustandszeitreihe(n) 16), oder offline (offline-Verarbeitung), also zeitlich nach einer Erfassung der Zeitreihen 14, 16. Die online-Verarbeitung und auch die offline-Verarbeitung, speziell aber die offline-Verarbeitung, kann bevorzugt mittels in der sogenannten Cloud verfügbarer Ressourcen (Rechenleistung, Speicherkapazität) erfolgen und als Mittel zur Ausführung des hier beschriebenen Verfahrens kommt insoweit bevorzugt eine Cloudplattform in Betracht. Eine solche Cloudplattform übernimmt optional auch die Funktion der vorstehend beschriebenen Vorrichtung 44.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Die Erfindung ist ein Verfahren zur automatischen Erzeugung gelabelter Signaturen 30 und ein Computerprogramm mit einer Implementation des Verfahrens. Im Rahmen des Verfahren wird zunächst eine Quantisierung zumindest einer mit Bezug auf eine Anlage 12 aufgenommenen Zustandszeitreihe 16 angepasst, nämlich derart, dass alle von der oder jeder Zustandszeitreihe 16 umfassten Zustände zumindest eine Zustandsdauer oberhalb einer Minimalzeit haben. Nach der Anpassung der Quantisierung werden Anlagenzustände 32 ermittelt. Diese werden aufgrund von Zustandswechseln in zumindest einer Zustandszeitreihe 16 ermittelt. Immer dann, wenn in zumindest einer Zustandszeitreihe 16 ein Zustandswechsel erfolgt, definiert dies einen relevanten Anlagenzustand 32. Schließlich werden als Signaturen 30 die zwischen den Orten/Positionen zweier aufeinanderfolgender Anlagezustände 32 liegenden Abschnitte einer mit Bezug auf die Anlage 12 aufgenommenen, synchronen Datenzeitreihe 14 ermittelt und diese mit einem Bezeichner 34 versehen, welcher zumindest einen die Signatur 30 bestimmenden Anlagenzustand 32 umfasst. Der Bezeichner 34 ist das der Signatur 30 automatisch zugeordnete Label.

## Patentansprüche

1. Verfahren zum automatischen Erzeugen gelabelter Signaturen (30) aus in Bezug auf eine technische Anlage (12) während eines vorgegebenen oder vorgebbaren Aufnahmezeitraums aufgenommenen Daten,
wobei die aufgenommenen Daten einerseits mittels einer Sensorik aufnehmbare, berechnete oder mittels einer Simulation erzeugte Daten umfassen und in zumindest einer Datenzeitreihe (14) zusammengefasst sind sowie andererseits Zustandswerte zumindest eines anlagenbezogenen Zustands umfassen und in zumindest einer Zustandszeitreihe (16) zusammengefasst sind,
wobei in einem ersten Schritt eine Quantisierung der oder jeder Zustandszeitreihe (16) angepasst wird,
wobei zur Anpassung der Quantisierung während eines vorgegebenen oder vorgebbaren Abschnitts der oder einer Zustandszeitreihe (16) ein Abstand zwischen zwei aufeinanderfolgenden Zustandswechseln mit einer vorgegebenen oder vorgebbaren Minimalzeit verglichen wird und wobei im Falle einer Unterschreitung die Quantisierung der oder jeder Zustandszeitreihe (16) angepasst wird,
wobei in einem zweiten Schritt aus der oder jeder Zustandszeitreihe (16) Anlagenzustände (32) ermittelt werden,
wobei ein Anlagenzustand (32) die Zustandswerte aller Zustandszeitreihen (16) am Ort eines Zustandswechsels in zumindest einer Zustandszeitreihe (16) umfasst,
wobei in einem dritten Schritt als Signaturen (30) die zwischen den Orten zweier aufeinanderfolgender Anlagezustände (32) liegenden Abschnitte der oder jeder Datenzeitreihe (14) ermittelt werden und
wobei jede Signatur (30) mit einem als Label fungierenden Bezeichner (34) versehen wird, welcher zumindest einen die Signatur (30) bestimmenden Anlagenzustand (32) umfasst.

2. Verfahren nach Anspruch 1,
wobei zur Anpassung der Quantisierung der oder jeder Zustandszeitreihe (16) eine Schrittweite, mit welcher ein Zustand in einer jeweiligen Zustandszeitreihe (16) abgebildet wird, angepasst wird.

3. Verfahren nach Anspruch 1 oder 2,
wobei im dritten Schritt eine Länge jeder ermittelten Signatur (30) mit einer vorgegebenen oder vorgebbaren Maximallänge verglichen wird und wobei Signaturen (30) mit einer die Maximallänge überschreitenden Länge ausgeschieden werden.

4. Verfahren nach einem der Ansprüche 1, 2 oder 3,
wobei vor dem ersten Schritt Abstände zwischen zwei aufeinanderfolgenden Zustandswechseln in der oder einer Zustandszeitreihe (16) ermittelt werden, wobei eine Dauer eines durch zwei aufeinanderfolgende Zustandswechsel bestimmten Abschnitts mit einer vorgegebenen oder vorgebbaren Maximaldauer verglichen wird und wobei Abschnitte mit einer die Maximaldauer überschreitenden Dauer aus der Zustandszeitreihe (16) ausgeschieden werden.

5. Verfahren nach einem der vorangehenden Ansprüche,
wobei eine Zustandszeitreihe (16) ohne Zustandswechsel während des Aufnahmezeitraums ausgeschieden wird.

6. Verfahren nach einem der vorangehenden Ansprüche,
wobei der Bezeichner (34) einen Zeitstempel (36) umfasst.

7. Verfahren nach einem der vorangehenden Ansprüche,
wobei die ermittelten und während des Aufnahmezeitraums erfassten Signaturen (30) mit gleichem Anlagenzustand (32) zu einer Gruppe (42) zusammengefasst werden.

8. Verfahren nach Anspruch 7,
wobei die von einer Gruppe (42) umfassten Signaturen (30) einer zur Ausführung eines Verfahrens zum maschinellen Lernen bestimmten Vorrichtung (44) übermittelt werden.

9. Verfahren nach Anspruch 7,
wobei die von einer Gruppe (42) umfassten Signaturen (30) einer zur Ausführung eines Verfahrens zur statistischen Auswertung bestimmten Vorrichtung (44) übermittelt werden.

10. Verfahren nach Anspruch 7,
wobei die von einer Gruppe (42) umfassten Signaturen (30) einer zur Ausführung einer zur Erstellung einer visuellen Darstellung der Signaturen (30) bestimmten Vorrichtung (44) übermittelt werden.

11. Computerprogramm (24) mit Programmcodemitteln, um alle Schritte von jedem beliebigen der Ansprüche 1 bis 10 durchzuführen, wenn das Computerprogramm (24) auf einem Computer ausgeführt wird.

12. Digitales Speichermedium mit elektronisch auslesbaren Steuersignalen, die so mit einem programmierbaren Gerät, insbesondere einem Computer, zusammenwirken können, dass ein Verfahren nach einem der Ansprüche 1 bis 10 ausgeführt wird.

13. Vorrichtung (10, 44), insbesondere Computer, mit einer Verarbeitungseinheit (22) und einem Speicher (20), in den ein Computerprogramm (24) nach Anspruch 11 geladen ist, das im Betrieb der Vorrichtung (10, 44) durch dessen Verarbeitungseinheit (22) ausgeführt wird.
